Europäisches Patentamt

European Patent Office

Office européen des brevets

(11) Veröffentlichungsnummer: **0 313 928 B1**

## (12) EUROPÄISCHE PATENTSCHRIFT

(45) Veröffentlichungstag der Patentschrift: **13.05.92**

(21) Anmeldenummer: **88117026.0**

(22) Anmeldetag: **13.10.88**

(51) Int. Cl.5: **G05D 13/62**, H02P 5/16

(54) **Verfahren zur Erfassung und Regelung eines Federmoments sowie einer Differenzdrehzahl bei rotatorisch angetriebenen Zwei-Massen-Systemen.**

(30) Priorität: **26.10.87 DE 3736214**

(43) Veröffentlichungstag der Anmeldung:
**03.05.89 Patentblatt 89/18**

(45) Bekanntmachung des Hinweises auf die Patenterteilung:
**13.05.92 Patentblatt 92/20**

(84) Benannte Vertragsstaaten:
**DE FR GB IT NL SE**

(56) Entgegenhaltungen:

**REGELUNGSTECHNIK vol. 26, no. 11, November 1978, MUNCHEN G.WEIHRICH: "DREHZAHLREGELUNG VON GS-ANTRIEBEN UNTER VERWENDUNG EINES ZUSTANDS- UND STOERGROESSEN-BEOBACHTERS"**

(73) Patentinhaber: **SIEMENS AKTIENGESELL-SCHAFT**
**Wittelsbacherplatz 2**
**W-8000 München 2(DE)**

(72) Erfinder: **Papiernik, Wolfgang, Dr.**
**Eskiltunastrasse 9**
**W-8520 Erlangen(DE)**
Erfinder: **Tröndle, Hans-Peter, Dr.**
**Südhang 14**
**W-8550 Forchheim/Kersbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Regelung von Torsionsschwingungen bei rotatorisch angetriebenen Systemen, wobei die gesamte Antriebseinheit wie ein elastisch gekoppeltes, Eigenschwingungen ausführendes Zwei-Massen-System wirkt, wobei durch diese Eigenschwingungen ein Federmoment sowie eine Differenzdrehzahl zwischen den beiden Massen entsteht.

Wellen oder Achsen von rotatorisch angetriebenen Systemen sind Torsionsspannungen ausgesetzt, die aufgrund der nicht ideal starren Materialeigenschaften der Welle oder Achse zu elastischen Verformungen führen. Physikalisch läßt sich die Antriebseinheit wie zwei, ideal starre Massen betrachten, die durch eine Feder verbunden sind. Dabei kann die eine Masse als träge Masse des Motors, die andere als träge Masse der Last aufgefaßt werden. Eine solche Antriebseinheit führt Eigenschwingungen aus, die einerseits die Regelung eines jeweiligen Systems, beispielsweise einer Werkzeugmaschine oder eines Roboters, negativ beeinflussen, andererseits das betroffene Material stark beanspruchen.

Bei bestimmten Systemen, wie beispielsweise bei handelsüblichen Werkzeugmaschinen, bei denen die jeweilige Last entweder rotatorisch oder linear bewegt wird, ist es möglich, durch jeweils einen Meßgeber am Motor sowie einen Meßgeber an der Last eine Differenzdrehzahl oder eine Differenzlage der Lastwelle bzw. der Motorwelle zu messen. Da die Meßgeber an der Motorwelle bei geregelten Systemen immer vorhanden sind, werden für diese Art der Regelung eines Federmoments bzw. einer Differenzdrehzahl noch zusätzliche Meßgeber an der Lastwelle benötigt. Diese Maßnahme ist jedoch sehr kostenintensiv.

Oft ist es aber überhaupt nicht möglich, ein direktes Meßsystem an der Last anzubringen, so z.B. bei Robotern, die ihre Hand bzw. ihren Greifarm an jeden beliebigen Punkt eines vorgegebenen, dreidimensionalen Arbeitsraumes bewegen können.

Aus dem Aufsatz "Drehzahlregelung von Gleichstromantrieben unter Verwendung eines Zustands- und Störgrößen-Beobachters", von G. Weihrich, erschienen in der Zeitschrift "Regelungstechnik", Heft 11, 1978, ist ein Verfahren zur Regelung von Torsionsschwingungen bekannt, bei dem eine Schwingungsdämpfung erreicht wird, ohne daß lastseitig ein Drehzahlaufnehmer erforderlich ist. Dazu wird durch einen vollständigen Beobachter die gesamte Regelstrecke nachgebildet und die Differenzdrehzahl aus der Differenz zwischen Motor- und Lastdrehzahl ermittelt. Durch die vollständige Nachbildung der Regelstrecke ist der vollständige Beobachter sehr stabilitätsempfindlich und die Parameter müssen äußerst genau eingestellt werden. Außerdem wird das durch die Torsionsschwingungen entstehende Federmoment durch den vollständigen Beobachter nicht erfaßt.

Aufgabe der Erfindung ist es, ein Verfahren der eingangs genannten Art so auszugestalten, daß das auftretende Federmoment sowie die Differenzdrehzahl ohne direktes Messen der Lastdrehzahl bzw. der Lastlage bestimmbar sind.

Gemäß der Erfindung wird diese Aufgabe dadurch gelöst, daß das Federmoment sowie die Differenzdrehzahl zwischen der die träge Masse des Motors repräsentierenden ersten Masse der Antriebseinheit und der die träge Masse der Last repräsentierenden zweiten Masse der Antriebseinheit durch einen Beobachter simuliert und der Regelstrecke des gesamten Systems als Korrekturwerte zugeführt werden, wobei der Beobachter Regelglieder zur Simulation der Motor-Istdrehzahl enthält, wobei die simuliert Differenzdrehzahl direkt aus der Differenz der simulierten Motordrehzahl mit der Istdrehzahl des Motors und das simulierte Federmoment aus der Integration der simulierten Differenzdrehzahl bestimmbar ist.

Eine erste Ausbildung der Erfindung ist dadurch gekennzeichnet, daß ein Motor-Sollmoment durch einen PI-Regler und durch die Korrekturwerte vorgebbar ist, wobei ein auftretendes Lastmoment durch den I-Anteil des PI-Reglers kompensierbar ist. Durch diese einfache Maßnahme kann zusätzlich zur Regelung des Federmoments ein eventuell angreifendes Lastmoment kompensiert werden.

Die gesamte Regelstrecke kann aber auch so ausgebildet sein, daß das Motor-Sollmoment durch ein Proportionalglied und durch die Korrekturwerte vorgebbar ist, wobei ein auftretendes Lastmoment durch Integration einer zweiten Drehzahldifferenz kompensierbar ist, wobei die zweite Drehzahldifferenz aus dem Vergleich einer, durch Nachbildung der gesamten Regelstrecke einschließlich des Beobachters erzeugbaren theoretischen Motordrehzahl, sowie der Motor-Istdrehzahl bestimmbar ist. Diese Maßnahme zur Ausregelung des Lastmomentes ist besonders dann vorteilhaft, wenn eine höhere Regelgeschwindigkeit erzielt werden soll, da durch diese Maßnahme das Zeitverhalten der Regelstrecke etwa um den Faktor 2 gegenüber einem PI-Regler verbessert wird.

Ein Ausführungsbeispiel der Erfindung ist in der Zeichnung dargestellt und wird im folgenden näher erläutert. Dabei zeigen:

FIG 1 einen Signalflußplan einer verfahrensgemäßen Regelstrecke mit einem PI-Regler zur Kompensation eines Lastmoments und

FIG 2     einen Signalflußplan einer verfahrensgemäßen Regelstrecke mit einer Streckennachbildung zur Kompensation des Lastmoments.

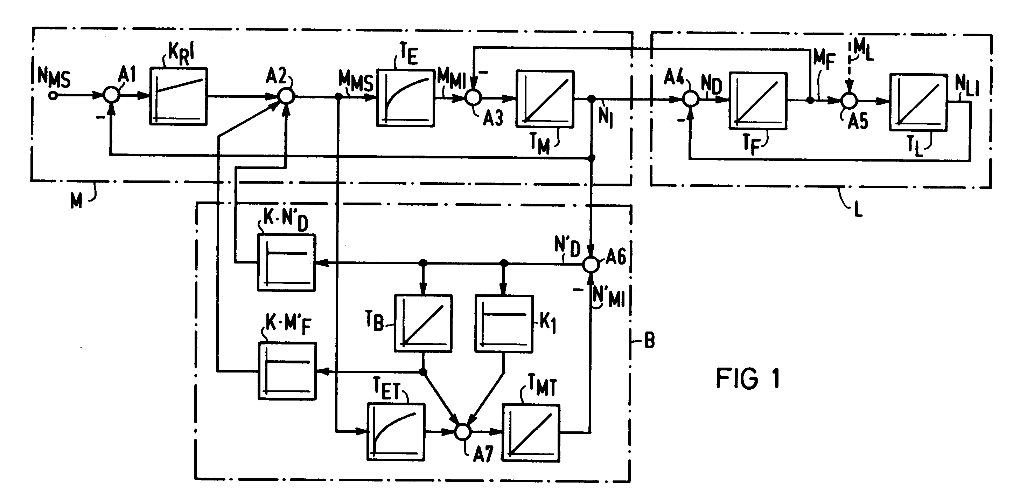

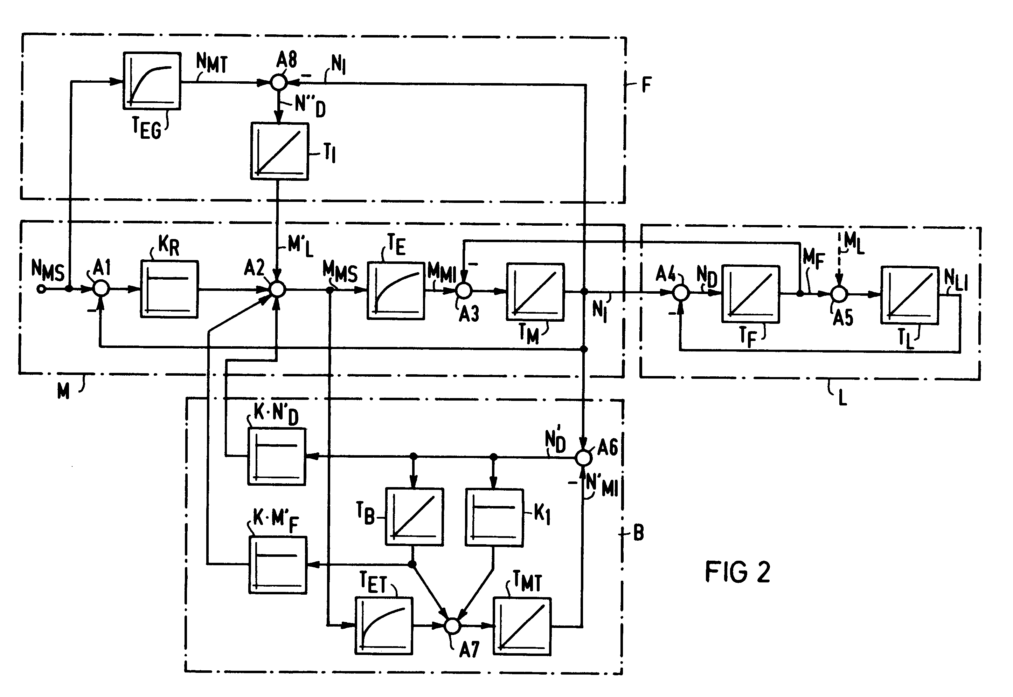

Im Signalflußplan gemäß FIG 1 und FIG 2 ist die Richtung des jeweiligen Signalflusses durch Pfeile angedeutet. Zur Kennzeichnung der wirkungsmäßigen Abhängigkeit des jeweiligen Ausgangssignals vom Eingangssignal ist in jeden Block des Signalflußplanes die jeweilige Übergangsfunktion eingezeichnet. Außerdem sind die jeweiligen Blöcke mit ihren charakteristischen Konstanten bzw. Zeitkonstanten bezeichnet. Diese Konstanten bzw. Zeitkonstanten werden im folgenden auch als Bezugszeichen verwendet.

Die Darstellung gemäß FIG 1 zeigt einen Signalflußplan einer verfahrensgemäßen Regelstrecke mit einem PI-Regler $K_R$,I zur Kompensation eines Lastmoments. Der Signalflußplan ist jeweils durch gestrichelte Linien in den Regelkreis M einer Motorwelle, welcher die träge Masse des Motors, den Regelkreis L einer Lastwelle, welcher die träge Masse der Last repräsentiert, sowie den Regelkreis B eines Beobachters aufgeteilt.

Die Motorwelle sowie die Lastwelle besteht im einfachsten Fall, beispielsweise bei einer Werkzeugmaschine, aus einer Achse, die durch einen Motor angetrieben wird und die mit einer Last, beispielsweise in Form eines Fräskopfes, beaufschlagt ist. Die entsprechende mechanische Ausgestaltung ist durch das jeweilige System (Werkzeugmaschine, Roboter, etc.) vorgegeben. Auf eine beispielhafte Darstellung ist daher verzichtet worden. Eine solche Antriebswelle stellt eine Antriebseinheit dar, die sich gedanklich in zwei voneinander getrennte Massen, die Motorwelle und die Lastwelle, trennen läßt, wobei beide Massen ideell durch eine Feder verbunden sind. Dabei wird die träge Masse der Motorwelle sowie die träge Masse der Lastwelle als ideal starr angesehen und die beide Massen verbindende Feder repräsentiert die Elastizität der realen, nicht ideal starren Welle.

Wird dem Regelkreis M der Motorwelle eine Solldrehzahl $N_{MS}$ vorgegeben, so wird dem Motor über den Regler $K_R$,I ein Motor-Sollmoment $M_{MS}$ zugeführt. Entsprechend der Motorcharakteristik resultiert daraus ein Motor-Istmoment $M_{MI}$, das zu einer Drehbewegung des Motors führt. Bedingt durch die Elastizität der Antriebswelle wirkt dem Motor-Istmoment $M_{MI}$ das Federmoment $M_F$, wie am Addierglied A3 gezeigt, entgegen. Am Ausgang des Integriergliedes $T_M$ läßt sich dann eine dem resultierenden Antriebsmoment entsprechende Ist-Drehzahl $N_I$ der Motorwelle abgreifen. Diese Ist-Drehzahl $N_I$ der Motorwelle ist jedoch nicht identisch mit der Ist-Drehzahl der Lastwelle $N_{LI}$. Bleibt man bei der physikalischen Betrachtungsweise von zwei starren Massen und einer diese verbindenden Feder, so wird sich beim Anlaufen des Motors zunächst die Feder spannen und erst dann würde sich zeit- und lageverzögert die Lastwelle L mitdrehen.

Der Regelkreis L der Lastwelle ist ein physikalisches Modell, das der zweiten Masse des Zwei-Massen-System-Modells entspricht. Angenommen, man könnte die tatsächliche Istdrehzahl der Lastwelle $N_{LI}$ messen, so könnte man diese am Addierer A4 von der Ist-Drehzahl des Motors $N_I$ subtrahieren. Zwischen der resultierenden Differenzdrehzahl $N_D$ und dem Federmoment $M_F$ besteht ein integraler Zusammenhang, so daß das Federmoment $M_F$ über das Integrierglied $T_F$ ermittelt werden könnte. Aus den in der Beschreibungseinleitung genannten Gründen soll aber gerade auf eine solche Messung der Ist-Drehzahl $N_{LI}$ der Lastwelle verzichtet werden.

Deshalb wird im Regelkreis B des Beobachters die Motorcharakteristik mittels eines Regelgliedes $T_{ET}$ nachgebildet, so daß durch das Integrierglied $T_{MT}$ die Istdrehzahl des Motors $N'_{MI}$ simulierbar ist. Am Addierer A6 kann damit die vom Meßgeber des Motors abgreifbare Istdrehzahl $N_I$ mit der simulierten Istdrehzahl $N'_{MI}$ verglichen werden.

Liegt am Addierer A3 des Regelkreises M der Motorwelle ein Federmoment $M_F$ an, so ergibt sich am Addierer A6 eine Regeldifferenz $N'_D$ zwischen der tatsächlichen, jetzt durch das Federmoment $M_F$ beeinflußten Istdrehzahl $N_I$ des Motors und der simulierten, vom Federmoment $M_F$ noch nicht beeinflußten Istdrehzahl $N'_{MI}$.

Der aus dem Integrator $T_B$ und dem Proportionalglied $K_1$ bestehende PI-Regler wirkt über den Addierer A7 solange auf die Regelstrecke zur Simulation der Motordrehzahl $N'_{MI}$ ein, bis die Regeldifferenz $N'_D$ am Addierer A6 zu Null wird.

Ist im eingeschwungenen Zustand die Regeldifferenz $N'_D$ am Addierer A6 gleich Null, so ist ersichtlich, daß die vom Integrierglied $T_B$ auf den Addierer A7 gegebene Größe genau der Größe $M'_F$ entspricht, die im Regelkreis M der Motorwelle am Addierer A3 angreift, also dem Federmoment $M_F$.

Macht man noch die Ersatzzeitkonstante des Regelkreises B des Beobachters wesentlich kleiner als die Periode der Schwingung des Feder-Massen-Systems, so erscheint am Ausgang des Integriergliedes $T_B$ auch dynamisch das Federmoment $M'_F$ und zwar mit der Ersatzzeitkonstanten des Regelkreises B des Beobachters geglättet.

Wie im Regelkreis L der Lastwelle erkennbar ist, ergibt sich das Federmoment $M_F$. aus dem Integral über die Differenzdrehzahl $N_D$, die zwischen der trägen Masse des Motors und der trägen Masse der Last besteht.

Da auch das Federmoment $M'_F$ aus einer Integration durch das Integrierglied $T_B$ im Regelkreis B hervorgeht, ist das Eingangssignal des Integriergliedes $T_B$, also die Regelabweichung $N'_D$, die am Addierer A6 gebildet wird, direkt proportional zur Differenzdrehzahl $N_D$.

Die somit über den Beobachter B abgreifbare Differenzdrehzahl $N'_D$ sowie das Federmoment $M'_F$ werden dann jeweils mit einem konstanten Faktor K multipliziert über den Addierer A2 auf die Regelstrecke M der Motorwelle gegeben, so daß damit die Eigenschwingung des Feder-Massen-Systems geregelt werden kann.

Wirkt zusätzlich zum Federmoment $M_F$ ein Lastmoment $M_L$, wie im Regelkreis L der Lastwelle durch eine gestrichelte Wirkungslinie die zum Addierer A5 führt, gezeigt ist, so kann diese durch den I-Anteil eines PI-Reglers $K_R$,I im Regelkreis der Motorwelle M kompensiert werden.

Das Lastmoment kann aber auch wie in der Darstellung gemäß FIG 2 gezeigt, kompensiert werden. Die Darstellung gemäß FIG 2 unterscheidet sich dabei von der gemäß FIG 1 dadurch, daß zusätzlich ein Regelkreis F vorgesehen ist und daß der PI-Regler $K_R$,I im Regelkreis M der Motorwelle durch ein Proportionalregelglied $K_R$ ersetzt worden ist.

Durch das Regelglied $T_{EG}$ im Regelkreis F wird die gesamte Regelstrecke, die aus dem Regelkreis M der Motorwelle sowie aus dem Regelkreis L der Lastwelle und aus dem Regelkreis B des Beobachters besteht, nachgebildet und eine theoretische Motordrehzahl $N_{MT}$ simuliert. Durch diese theoretische Motordrehzahl $N_{MT}$ ist bereits das Federmoment $M_F$ sowie die Differenzdrehzahl $N_D$ berücksichtigt und Am Addierer A8 wird diese theoretische Motordrehzahl $N_{MT}$ mit der tatsächlichen Motordrehzahl $N_I$ verglichen. Ergibt sich eine Regelabweichung also eine Differenzdrehzahl $N''_D$, so kann daraus über ein Integrierglied $T_I$ eine dem Lastmoment proportionale Größe $M'_L$ stationär bestimmt und der Regelstrecke M der Motorwelle über den Addierer A2 zur Kompensation zugeführt werden.

## Patentansprüche

1.  Verfahren zur Regelung von Torsionsschwingungen bei rotatorisch angetriebenen Systemen, mit einer aus Motor und Last bestehenden Antriebseinheit, die wie ein elastisch gekoppeltes, Eigenschwingungen ausführendes Zwei-Massen-System wirkt, wobei durch diese Eigenschwingungen ein Federmoment ($M_F$) sowie eine Differenzdrehzahl ($N_D$) zwischen den beiden Massen besteht, wobei das Federmoment ($M_F$) sowie die Differenzdrehzahl ($N_D$) zwischen der die träge Masse des Motors repräsentierenden ersten Masse der Antriebseinheit und der die träge Masse der Last repräsentierenden zweiten Masse der Antriebseinheit durch einen Beobachter (B) simuliert und der Regelstrecke des gesamten Systems als Korrekturwerte ($N'_D$, $M'_F$) zugeführt werden, wobei der Beobachter (B) Regelglieder zur Simulation der Motor-Istdrehzahl ($N'_{MI}$) enthält, wobei die simulierte Differenzdrehzahl ($N'_D$) direkt aus der Differenz der simulierten Motordrehzahl ($N'_{MI}$) mit der Istdrehzahl ($N_I$) des Motors und das simulierte Federmoment ($M'_F$) aus der Integration der simulierten Differenzdrehzahl ($N'_D$), bestimmbar ist.

2.  Verfahren nach Anspruch 1, **dadurch gekennzeichnet,** daß ein Motor-Sollmoment ($M_{MS}$) durch einen PI-Regler ($K_R$, I) und durch die Korrekturwerte vorgebbar ist, wobei ein auftretendes Lastmoment ($M_L$) durch den I-Anteil des PI-Reglers ($K_R$, I) kompensierbar ist.

3.  Verfahren nach Anspruch 1, **dadurch gekennzeichnet,** daß das Motor-Sollmoment ($M_{MS}$) durch ein Proportionalglied ($K_R$) und durch die Korrekturwerte vorgebbar ist, wobei ein auftretendes Lastmoment ($M_L$) durch Integration einer zweiten Drehzahldifferenz ($N''_D$) kompensierbar ist, wobei die zweite Drehzahldifferenz ($N''_D$) aus dem Vergleich einer, durch Nachbildung der gesamten Regelstrecke (M, L) einschließlich des Beobachters (B) erzeugbaren, theoretischen Motordrehzahl ($N_{MT}$), sowie der Motor-Istdrehzahl ($N_I$) bestimmbar ist.

## Claims

1.  Process for the control of torsional oscillations in systems driven by rotator, with a drive unit consisting of motor and load, the drive unit acting as an elastically coupled two-mass system carrying out natural oscillations, whereby through these natural oscillations there is a spring moment ($M_F$) as well as a differential speed ($N_D$) between the two masses, whereby the spring moment ($M_F$) as well as the differential speed ($N_D$) between the first mass of the drive unit representing the inert mass of the motor and the second mass of the drive unit representing the inert mass of the load are simulated by an observer (B) and are supplied to the controlled member of the entire system as correction values ($N'_D$, $M'_F$), whereby the observer (B) contains control elements for the simulation of the actual motor speed ($N'_{MI}$), whereby the simulated differential speed ($N'_D$) can be determined directly from the difference of the simulated motor speed ($N'_{MI}$) with the actual speed ($N_I$) of the motor and the simulated spring moment ($M'_F$) from the integration of the simulated differential speed ($N'_D$).

**2.** Process according to claim 1, characterized in that a desired motor moment ($M_{MS}$) can be specified by a PI-controller ($K_R$, I) and by the correction values, whereby an occurring load moment ($M_L$) can be compensated by the I-part of the PI-controller ($K_R$, I).

**3.** Process according to claim 1, characterized in that the desired motor moment ($M_{MS}$) can be specified by a proportional element ($K_R$) and by the correction values, whereby an occurring load moment ($M_L$) can be compensated by the integration of a second speed difference ($N''_D$), whereby the second speed difference ($N''_D$) can be determined from the comparison of a theoretical motor speed ($N_{MT}$), which can be generated through simulation of the entire controlled system (M, L) including the observer (B), and of the actual motor speed ($N_I$).

**Revendications**

**1.** Procédé de régulation d'oscillations de torsion dans des systèmes entraînés en rotation, comportant une unité d'entraînement constituée par un moteur et une charge et qui agit à la manière d'un système à deux masses couplé élastiquement et exécutant des oscillations propres, et selon lequel sous l'effet de ces oscillations propres, il existe un moment élastique ($M_F$) ainsi qu'une vitesse de rotation différentielle ($N_D$) entre les deux masses, le moment élastique ($M_F$) ainsi que la vitesse de rotation différentielle ($N_D$) entre la première masse de l'unité d'entraînement, représentant la masse inerte du moteur, et la seconde masse de l'unité d'entraînement, qui représente la masse inerte de la charge, sont simulées par un dispositif d'observation (a) et sont envoyées à la section de réglage de l'ensemble du système en tant que valeurs de correction ($N'_D, M'_F$), le dispositif d'observation (B) contient des circuits de régulation pour simuler la vitesse de rotation réelle ($N'_{MI}$) du moteur, la vitesse de rotation différentielle simulée ($N'_D$) peut être déterminée directement à partir de la différence entre la vitesse de rotation simulée ($N'_{MI}$) du moteur et la vitesse réelle de rotation ($M_I$) du moteur, et le moment élastique simulé ($M'_F$) peut être déterminé à partir de l'intégration de la vitesse de rotation différentielle simulée ($N'_D$).

**2.** Procédé suivant la revendication 1, caractérisé par le fait qu'un moment de consigne ($M_{MS}$) du moteur peut être prédéterminé par un régulateur à action proportionnelle et intégrale ($K_R$,I) et par les valeurs de correction, un moment de charge ($M_L$) apparaissant pouvant être compensé par la composante intégrale du régulateur à action proportionnelle et intégrale ($K_R$, I).

**3.** Procédé suivant la revendication 1, caractérisé par le fait que le moment de consigne ($M_{MS}$) du moteur peut être prédéterminé par un circuit à action proportionnelle ($K_R$) et par des valeurs de correction, un moment de charge ($M_L$) apparaissant pouvant être compensé par intégration d'une seconde différence de vitesse de rotation ($N''_D$), la seconde différence de vitesse de rotation ($N''_D$) pouvant être déterminée à partir de la comparaison d'une vitesse de rotation théorique ($N_{MT}$) du moteur, pouvant être obtenue par simulation de l'ensemble de la section de régulation (M,L) y compris le dispositif d'observation (B), et de la vitesse de rotation réelle ($N_I$) du moteur.

FIG 1

FIG 2

EP 0 313 928 B1